# EUROPEAN PATENT SPECIFICATION

(11) **EP 3 488 992 B1**
(45) Date of publication and mention of the grant of the patent: **20.10.2021**
(21) Application number: 17830708.8
(22) Date of filing: 29.05.2017
(51) Int. Cl.: B29C 49/42, B29C 49/46, B29C 49/70, B29C 49/48, B29L 31/00, B29K 67/00

(54) **METHOD OF MANUFACTURING CONTAINER BY LIQUID BLOW-MOLDING**
VERFAHREN ZUR HERSTELLUNG EINES BEHÄLTERS DURCH FLÜSSIGKEITSBLASFORMEN
PROCÉDÉ DE PRODUCTION D'UN RÉCIPIENT PAR MOULAGE PAR SOUFFLAGE DE LIQUIDE

(30) Priority: 22.07.2016 JP 2016144721
(43) Date of publication of application: 29.05.2019
(73) Proprietor: Yoshino Kogyosho Co., Ltd., Tokyo 136-8531 (JP)
(72) Inventor: MORIKAMI, Shigeki, Kanagawa 259-1103 (JP)
(74) Representative: Murgitroyd & Company
(86) International application number: PCT/JP2017/019960
(87) International publication number: WO 2018/016188

(56) References cited:
- EP-A1- 2 767 384
- EP-A1- 2 930 005
- WO-A1-2014/167001
- WO-A1-2015/091565

## Description

### TECHNICAL FIELD

The present disclosure relates to a method of manufacturing a container by liquid blow molding.

### BACKGROUND

Resin-made containers such as bottles made of polypropylene (PP) and bottles made of polyethylene terephthalate (PET) are used to contain, as content fluids, various liquids such as beverages, cosmetics, medicines, detergents, and shampoos. A container body constituting such a container is typically manufactured by blow molding a preform formed of a thermoplastic resin material such as the above-mentioned materials.

As blow molding of supplying a pressurization medium into a preform to mold the preform into a container body having a part shaped along the inner surface of the cavity of the blow mold, liquid blow molding using a liquid as a pressurization medium is known.

For example, the following container manufacturing method is known as described in JP 2016-32921 A (PTL 1): In liquid blow molding, a content fluid to be contained in a container is supplied into a preform as a pressurization medium and a container body is manufactured. This eliminates the need for a step of filling the molded container body with the content fluid, and simplifies the manufacturing process and the molding and filling line. Further the disclosures of WO 2014/167001 A1, EP 2930005 A1, EP 2767384 A1 and WO 2015/091565 A1 may be helpful for understanding the present invention

### CITATION LIST

### Patent Literature

PTL 1: JP 2016-32921 A

### SUMMARY

### (Technical Problem)

In the case of manufacturing the container body by liquid blow molding in this way, when taking the molded container body out of the mold and conveying the container body to a capping position at which the mouth part of the container body is sealed, the liquid in the container body needs to be kept from spilling from the mouth part.

To prevent such spilling of the liquid, a cap may be attached (capping) before taking the container body out of the mold, as described in PTL 1. This, however, is likely to require a complex manufacturing device.

It could therefore be helpful to provide a method of manufacturing a container by liquid blow molding with which, when conveying a liquid blow molded container body from a mold to a capping position, spilling of the liquid from the mouth part of the container body can be reduced.

### (Solution to Problem)

The present invention refers to a method of manufacturing a container by liquid blow molding according to claim 1. Advantageous embodiments may include features of depending claims. Thus a method of manufacturing a container by liquid blow molding according to the present disclosure comprises: a preform placement step of placing a preform in a mold; a liquid blow molding step of supplying a pressurized liquid to inside of the preform placed in the mold, and molding the preform into a container body containing the liquid; a grasp and conveyance step of grasping the container body by a grasping device at a mold opening position of the mold, and conveying the container body grasped by the grasping device to a cup capable of containing a bottom part of the container body to hold the container body; and a cup conveyance step of conveying the cup holding the container body to a capping position.

Preferably, in the method of manufacturing a container by liquid blow molding according to the present disclosure, in the grasp and conveyance step, the container body is conveyed in a direction parallel to a conveyance direction of the preform in the preform placement step.

Preferably, in the method of manufacturing a container by liquid blow molding according to the present disclosure, in the grasp and conveyance step, the container body is conveyed in a direction orthogonal to a conveyance direction of the preform in the preform placement step.

Preferably, in the method of manufacturing a container by liquid blow molding according to the present disclosure, when opening the mold, the mold is rotated about a rotating axis located below the mold, and displaced.

### (Advantageous Effect)

It is thus possible to provide a method of manufacturing a container by liquid blow molding with which, when conveying a liquid blow molded container body from a mold to a capping position, spilling of the liquid from the mouth part of the container body can be reduced.

### BRIEF DESCRIPTION OF THE DRAWINGS

In the accompanying drawings:
FIG. 1 is a diagram illustrating a procedure of a method of manufacturing a container by liquid blow molding according to one of the disclosed embodiments;
FIG. 2 is a plan view schematically illustrating the state in each step illustrated in FIG. 1;
FIG. 3A is a plan view schematically illustrating the state in a grasp and conveyance step in a method of manufacturing a container by liquid blow molding according to another one of the disclosed embodiments; and
FIG. 3B is a side view schematically illustrating the state in the grasp and conveyance step illustrated in FIG. 3A.

### DETAILED DESCRIPTION

A method of manufacturing a container by liquid blow molding according to one of the disclosed embodiments is described in detail below, with reference to drawings.

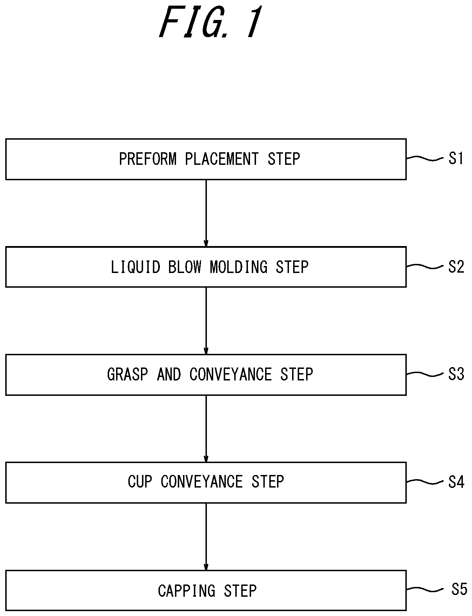

A method of manufacturing a container according to this embodiment includes a preform placement step S1, a liquid blow molding step S2, a grasp and conveyance step S3, a cup conveyance step S4, and a capping step S5, as illustrated in FIG. 1.

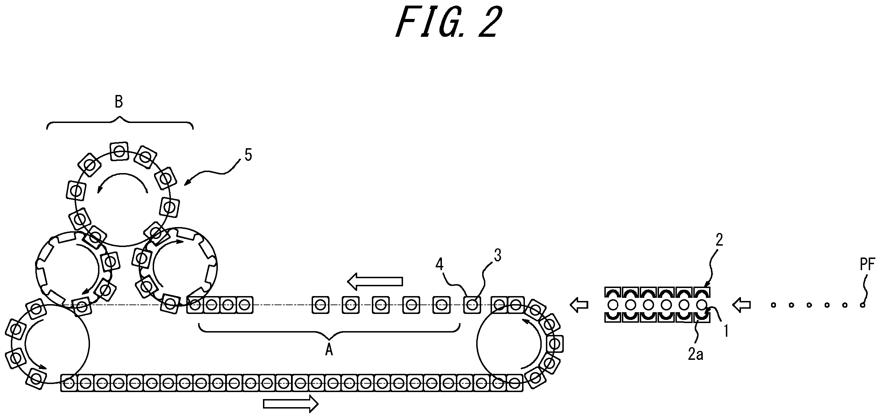

A batch-type mold 2 having a plurality of (six in the drawing) cavities 1 arranged in series is used in this embodiment, as illustrated in FIG. 2. In the preform placement step S1, a plurality of preforms PF are simultaneously conveyed and placed in the opened mold 2, and mold clamping is conducted to perform the liquid blow molding step S2. Following this, the grasp and conveyance step S3 of grasping each of the mouth parts of the plurality of container bodies 3 containing a liquid by a grasping device and conveying the plurality of container bodies 3 to the positions of cups 4 arranged beforehand is performed. Further, the cup conveyance step S4 of conveying the cups 4 holding the container bodies 3 to a capping position is performed, and then the capping step S5 of capping the container bodies 3 using a capper 5 is performed.

In the preform placement step S1, the preforms PF made of a resin are placed in the cavities 1 of the opened mold 2 for blow molding, and then the mold is clamped. The preforms PF can be obtained, for example, through injection molding, compression molding, direct blow molding (extrusion blow molding), extrusion molding, or the like using, as raw material, a thermoplastic resin such as polypropylene (PP) or polyethylene terephthalate (PET). Each preform PF includes a bottomed cylindrical barrel part and a mouth part connected to the barrel part. After preheating the preform PF using a heater or the like to a predetermined temperature at which stretchability is developed, the barrel part of the preform PF can be placed in the cavity 1 of the mold 2. In this embodiment, the mold 2 can have a right/left two-division structure composed of a pair of split molds 2a openable right and left in the horizontal direction. The mold structure is, however, not limited to such, and a bottom mold may be provided on the inner side of the lower part of the right and left split molds 2a or below the right and left split molds 2a. The inner surface shape of the mold 2 corresponds to the outer shape of the container body 3.

A blow molding device that performs the liquid blow molding step S2 may include, for example, a nozzle unit provided above the mold 2 and a pressurized liquid supplier connected to the nozzle unit. The pressurized liquid supplier is capable of supplying a liquid pressurized to a pressure suitable for liquid blow molding into the plurality of preforms PF placed inside the respective cavities 1 of the mold 2, through the nozzle unit. For example, the pressurized liquid supplier may include a plunger pump driven by a servomotor. Although six nozzle units are provided in correspondence with the cavities 1 of the mold 2 in this embodiment, the structure is not limited to such.

Each nozzle unit is movable in the vertical direction, and can come into contact with the upper surface of the mold 2. Each nozzle unit includes a nozzle that is fitted into the mouth part of the preform PF placed in the cavity 1 of the mold 2 when the nozzle unit comes into contact with the upper surface of the mold 2. The pressurized liquid can be supplied from the pressurized liquid supplier into the preform PF through this nozzle.

In the liquid blow molding step S2, the nozzle of the blow molding device is connected to the mouth part of the preform PF exposed from the mold 2, and the pressurized liquid is supplied to the inside of the preform PF. Thus, the preform PF can be molded into a container body 3 that is shaped along the inner surface of the cavity 1 and contains the liquid.

In the liquid blow molding step S2, biaxial stretch blow molding using a stretching rod may be performed. The pressurized liquid is a content fluid to be contained in the container body 3, and is a liquid such as a beverage, cosmetics, a medicine, a detergent, or a shampoo.

The grasp and conveyance step S3 is a step of grasping, by the grasping device, the container body 3 containing the liquid at the mold opening position of the mold 2 and conveying the grasped container body 3 to the position of the cup 4. Thus, the container body 3 is held in an erecting position in the cup 4 that contains the bottom part of the container body 3. In this embodiment, the conveyance direction of the container body 3 in the grasp and conveyance step S3 is parallel to the conveyance direction of the preform PF in a plan view, as illustrated in FIG. 2. More specifically, the conveyance direction of the container body 3 in the grasp and conveyance step S3 and the conveyance direction of the preform PF are on the same straight line. The conveyance of the container body 3 in the grasp and conveyance step S3 is not limited to conveyance in the horizontal direction, and may include conveyance in the vertical direction or conveyance in an obliquely upward/downward direction.

The grasping device is not limited, as long as its structure is capable of grasping and conveying the container body 3. For example, the grasping device may have a grasping portion that grasps the mouth part of the container body 3 by sandwiching it from the outside, and moves in the horizontal direction along a rail to convey the container body 3 to the position of the cup 4. The grasping portion may be, for example, a structure that holds the container body 3 simply by being hooked on the neck ring or the flange above the neck ring. The part of the container body grasped by the grasping device is not limited.

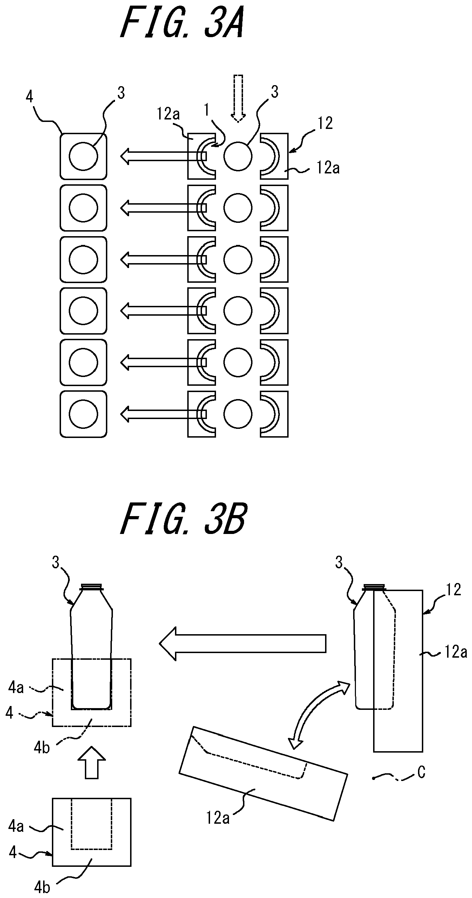

The cup 4 has a shape that can contain the bottom part of the container body 3 after the liquid blow molding and hold the container body 3 in an erecting position with the opening of the mouth part facing upward. In this example, the cup 4 includes a side wall 4a that surrounds the side surface of the container body 3 and a bottom wall 4b connected to the lower part of the side wall 4a, as illustrated in FIG. 3B. However, the cup 4 is not limited to such. To enhance stability when holding the container body 3 and prevent the container body 3 from wobbling, the inner surface of the cup 4 is preferably shaped to conform to the outer shape of the container body 3. For example, the cup 4 is placed on a conveyor lateral to the mold 2.

The mold opening position of the mold 2 need not necessarily be the position at which the liquid blow molding step S2 is performed. In detail, after the liquid blow molding step S2, the mold 2 may be moved to a position different from the position at which the liquid blow molding step S2 is performed, before opening the mold. In this case, by moving the mold 2 to a position that does not overlap, in the vertical direction, with the nozzle unit of the blow molding device and the device (preform conveyance device) for conveying the preform PF to the mold 2, the method and direction of grasping the container body 3 by the grasping device are less likely to be restricted by equipment such as the nozzle unit and the preform conveyance device. This eases the grasp and conveyance step S3.

In the grasp and conveyance step S3, the grasping device holding the container body 3 may be moved downward to insert the bottom part of the container body 3 into the cup 4 from above, or the cup 4 may be moved upward from below the container body 3 conveyed by the grasping device to contain the bottom part of the container body 3 in the cup 4. The cup 4 may be placed on a conveyance device such as a conveyor beforehand, or placed on the conveyance device after the container body 3 is held by the cup 4.

The cup conveyance step S4 is a step of conveying the cup 4 holding the container body 3 to the capping position by a conveyance means such as a circulation-type conveyor. As illustrated in FIG. 2, the conveyance path of the cup 4 in this embodiment includes a rectilinear region A in which the container body 3 moves rectilinearly from the position at which the container body 3 is placed in the cup 4, and a rotary region B (rotation region) connected to the rectilinear region A and leading to the rotary-type capper 5. The conveyance path in the cup conveyance step S4 is not limited to the illustrated example, and may be changed as appropriate. The conveyance of the cup 4 in the cup conveyance step S4 is not limited to conveyance in the horizontal direction, and may include conveyance in the vertical direction or conveyance in an obliquely upward/downward direction.

In the cup conveyance step S4, cups 4 adjacent in the traveling direction may be conveyed while being in close contact with each other. A screw or the like may be used to control the distance (pitch) between cups 4 adjacent in the traveling direction. The pitch may be controlled in accordance with the rotary-type capper 5, and timing may be synchronized upon transfer from the rectilinear region A to the rotary region B.

In the capping step S5, the mouth part of the container body 3 is sealed with a cap such as a closure cap using the capper 5 at the capping position. The sealing with the closure cap may be performed by screwing using a threaded portion, or by fitting using an undercut shape. Instead of the closure cap, an attachment cap of a discharge device with a pump, an attachment cylindrical portion of a discharge plug, or the like may be attached to the mouth part of the container body 3. Although the rotary-type capper 5 for continuous capping is used in this embodiment, the capper is not limited to such, and a batch-type capper for intermittent capping may be used. The container body 3 sealed in the capping step S5 is taken out of the cup 4 as necessary. The emptied cup 4 is again conveyed to the position for receiving the container body 3, by the conveyance device.

As described above, the method of manufacturing a container by liquid blow molding according to this embodiment includes: a preform placement step S1 of placing a preform PF in a mold 2; a liquid blow molding step S2 of supplying a pressurized liquid to the inside of the preform PF placed in the mold 2, and molding the preform PF into a container body 3 containing the liquid; a grasp and conveyance step S3 of grasping the container body 3 by a grasping device at a mold opening position of the mold 2, and conveying the container body 3 grasped by the grasping device to a cup 4 capable of containing the bottom part of the container body 3 to hold the container body 3; and a cup conveyance step S4 of conveying the cup 4 holding the container body 3 to a capping position.

With the method of manufacturing a container by liquid blow molding according to this embodiment, during the conveyance in the cup conveyance step S4, the container body 3 has its side surface supported by the side wall 4a of the cup 4 and its bottom surface supported by the bottom wall 4b of the cup 4, so that the container body 3 can be conveyed in a constantly stable erecting position. This reduces the possibility that the content fluid spills from the opening of the mouth part of the container body 3 during the conveyance. Moreover, a complex manufacturing device required in the case of capping the container body 3 before taking it out of the mold 2 is unnecessary.

Moreover, with the method of manufacturing a container by liquid blow molding according to this embodiment, the container body 3 is contained in the cup 4 in the cup conveyance step S4, and thus is kept from being in direct contact with the conveyance means such as a conveyor or a screw or is unlikely to be in contact with the conveyance means. Hence, even in the case where the container body 3 is thin and easy to deform, a problem such as the container body 3 deforming due to an external force during the conveyance can be prevented.

FIGS. 3A and 3B illustrate another one of the disclosed embodiments. Parts having the same basic functions as those in the foregoing embodiment are given the same reference signs in the drawings, and their description is omitted. In the foregoing embodiment, the mold 2 is opened right and left in the horizontal direction. In this embodiment, at the time of mold opening, one of right and left split molds 12a of a mold 12 is rotated (swung) about a rotating axis C located below and displaced, as illustrated in FIG. 3B. By using such a mold 12, the container body 3 can be conveyed in the direction of the rotated and displaced split mold 12a and taken out, in the grasp and conveyance step S3. This conveyance direction is orthogonal to the preform conveyance direction designated by the dashed arrow. With such a structure, the conveyance distance of the container body 3 in the grasp and conveyance step S3 can be shortened as compared with the case where the container body 3 is conveyed from the mold opening position of the mold 2 to the cup 4 in the direction (the direction orthogonal to the opening/closing direction of the mold 2) parallel to the conveyance direction of the preform PF as in the foregoing embodiment. With a shorter conveyance distance in the grasp and conveyance step S3, the possibility that the content fluid spills from the mouth part of the container body 3 can be reduced.

The present disclosure is not limited to the embodiments described above, and various changes can be made without departing from the scope of the present disclosure as defined in the appended claims.

For example, although the mold 2 has six cavities 1 arranged in series in the foregoing embodiments, the number and arrangement of the cavities 1 may be freely set as long as the mold 2 has at least one cavity 1.

### REFERENCE SIGNS LIST

- 1: cavity
- 2: mold
- 2a: split mold
- 3: container body
- 4: cup
- 4a: side wall
- 4b: bottom wall
- 5: capper
- 12: mold
- 12a: split mold
- PF: preform
- S1: preform placement step
- S2: liquid blow molding step
- S3: grasp and conveyance step
- S4: cup conveyance step
- S5: capping step

## Claims

1. A method of manufacturing a container by liquid blow molding, the method comprising:
a preform placement step (S1) of placing a preform (PF) in a mold (2);
a liquid blow molding step (S2) of supplying a pressurized liquid to inside of the preform (PF) placed in the mold (2), and molding the preform (PF) into a container body (3) containing the liquid;
a grasp and conveyance step (S3) of grasping the container body (3) by a grasping device at a mold opening position of the mold (2), and conveying the container body (3) grasped by the grasping device to a cup (4) capable of containing a bottom part of the container body (3) to hold the container body (3); and
a cup conveyance step (S4) of conveying the cup (4) holding the container body (3) to a capping position.

2. The method of manufacturing a container according to claim 1,
wherein in the grasp and conveyance step (S3), the container body (3) is conveyed in a direction parallel to a conveyance direction of the preform (PF) in the preform placement step (S1).

3. The method of manufacturing a container according to claim 1,
wherein in the grasp and conveyance step (S3), the container body (3) is conveyed in a direction orthogonal to a conveyance direction of the preform (PF) in the preform placement step (S1).

4. The method of manufacturing a container according to claim 3,
wherein when opening the mold (2), the mold (2) is rotated about a rotating axis located below the mold (2), and displaced.

## Patentansprüche

1. Ein Verfahren zum Herstellen eines Behälters durch Flüssigkeitsblasformen, wobei das Verfahren Folgendes beinhaltet:
einen Vorformlingplatzierungsschritt (S1) des Platzierens eines Vorformlings (PF) in einer Form (2);
einen Flüssigkeitsblasformschritt (S2) des Einführens einer unter Druck stehenden Flüssigkeit in das Innere des in der Form (2) platzierten Vorformlings (PF) und des Formens des Vorformlings (PF) zu einem die Flüssigkeit fassenden Behälterkörper (3);
einen Greif- und Beförderungsschritt (S3) des Greifens des Behälterkörpers (3) durch eine Greifvorrichtung an einer Formöffnungsposition der Form (2) und des Beförderns des von der Greifvorrichtung gegriffenen Behälterkörpers (3) zu einer Aufnahmeeinrichtung (4), die in der Lage ist, einen unteren Teil des Behälterkörpers (3) zu fassen, um den Behälterkörper (3) zu halten; und
einen Aufnahmeeinrichtungsbeförderungsschritt (S4) des Beförderns der den Behälterkörper (3) haltenden Aufnahmeeinrichtung (4) zu einer Kappenaufsetzposition.

2. Verfahren zum Herstellen eines Behälters gemäß Anspruch 1,
wobei der Behälterkörper (3) in dem Greif- und Beförderungsschritt (S3) in einer zu einer Beförderungsrichtung des Vorformlings (PF) in dem Vorformlingplatzierungsschritt (S1) parallelen Richtung befördert wird.

3. Verfahren zum Herstellen eines Behälters gemäß Anspruch 1,
wobei der Behälterkörper (3) in dem Greif- und Beförderungsschritt (S3) in einer zu einer Beförderungsrichtung des Vorformlings (PF) in dem Vorformlingplatzierungsschritt (S1) senkrechten Richtung befördert wird.

4. Verfahren zum Herstellen eines Behälters gemäß Anspruch 3,
wobei die Form (2) beim Öffnen der Form (2) um eine unterhalb der Form (2) befindliche Drehachse gedreht wird und verlagert wird.

## Revendications

1. Un procédé de fabrication d'un contenant par moulage par soufflage de liquide, le procédé comprenant :
une étape de placement de préforme (S1) consistant à placer une préforme (PF) dans un moule (2) ;
une étape de moulage par soufflage de liquide (S2) consistant à introduire un liquide sous pression à l'intérieur de la préforme (PF) placée dans le moule (2), et à mouler la préforme (PF) en un corps de contenant (3) contenant le liquide ;
une étape de saisie et de transport (S3) consistant à saisir le corps de contenant (3) au moyen d'un dispositif de saisie au niveau d'une position d'ouverture de moule du moule (2), et à transporter le corps de contenant (3) saisi au moyen du dispositif de saisie jusqu'à un réceptacle (4) capable de contenir une partie de dessous du corps de contenant (3) afin de soutenir le corps de contenant (3) ; et
une étape de transport de réceptacle (S4) consistant à transporter le réceptacle (4) soutenant le corps de contenant (3) jusqu'à une position d'encapsulation.

2. Le procédé de fabrication d'un contenant selon la revendication 1,
dans lequel à l'étape de saisie et de transport (S3), le corps de contenant (3) est transporté dans une direction parallèle à une direction de transport de la préforme (PF) à l'étape de placement de préforme (S1).

3. Le procédé de fabrication d'un contenant selon la revendication 1,
dans lequel à l'étape de saisie et de transport (S3), le corps de contenant (3) est transporté dans une direction orthogonale à une direction de transport de la préforme (PF) à l'étape de placement de préforme (S1).

4. Le procédé de fabrication d'un contenant selon la revendication 3,
dans lequel lors de l'ouverture du moule (2), le moule (2) est tourné autour d'un axe de rotation situé au-dessous du moule (2), et déplacé.
